# EUROPEAN PATENT SPECIFICATION

(11) **EP 2 099 209 B1**
(45) Date of publication and mention of the grant of the patent: **08.06.2016**
(21) Application number: 09152966.9
(22) Date of filing: 17.02.2009
(51) Int. Cl.: H04N 1/32

(54) **Image forming apparatus, information processing method, and computer-readable recording medium storing information processing program**
Bilderzeugungsvorrichtung, Informationsverarbeitungsverfahren und computerlesbares Aufzeichnungsmedium, das ein Informationsverarbeitungsprogramm speichert
Appareil de formation d'images, procédé de traitement d'informations, et support d'enregistrement lisible sur un ordinateur stockant le programme de traitement d'informations

(30) Priority: 21.02.2008 JP 2008040215
(43) Date of publication of application: 09.09.2009
(73) Proprietor: Ricoh Company, Ltd., Tokyo 143-8555 (JP)
(72) Inventor: Terashita, Toshiyuki, Tokyo (JP)
(74) Representative: Schwabe - Sandmair - Marx

(56) References cited:
- EP-A- 1 233 333
- WO-A-2007/109650
- US-A1- 2007 234 359

## Description

### BACKGROUND OF THE INVENTION

### 1. Field of the Invention

The present invention generally relates to an image forming apparatus, an information processing method, and a computer-readable recording medium storing an information processing program in which plural program runtime environments exist and a program can be added to at least one of the plural program runtime environments.

### 2. Description of the Related Art

Recently, in image forming apparatuses such as a printer, a copying apparatus, and a multifunctional apparatus including a printing function and a copying function, expandability of programs in the apparatus has been realized. Therefore, a program created by, for example, a software vender other than the manufacturer of the apparatus can be installed in the apparatus after the apparatus is delivered to a customer (for example, see Patent Document 1).

In the above situation, the manufacturer of the apparatus has studied a function for preventing a general-purpose program from accessing the apparatus so as to protect resources such as the function and information having a high security level from the general-purpose program in the apparatus. For example, an access right to the apparatus is determined for each program, and an access to a specific resource of the apparatus from a program of a third party vendor is controlled.

[Patent Document 1] Japanese Unexamined Patent Publication No. 2004-312711

However, there are cases in which many programs are installed in an apparatus and programs to be installed are different among apparatuses. In these situations, when access control regarding a resource in an apparatus is applied to each program, many complicated procedures and a lot of management are required.

WO2007/10965 A pertains to an apparatus and method for capabilities verification and restriction of managed applications in a single program execution environment.

The present invention is defined by the subject-matter of the appended claims.

In a preferred embodiment of the present invention, there is provided an image forming apparatus, an information processing method, and a computer-readable recording medium storing an information processing program in which the use of a resource in an apparatus by a program is suitably controlled.

Features and advantages of the present invention are set forth in the description that follows, and in part will become apparent from the description and the accompanying drawings, or may be learned by practice of the invention according to the teachings provided in the description. Features and advantages of the present invention will be realized and attained by an image forming apparatus, an information processing method, and a computer-readable recording medium storing an information processing program particularly pointed out in the specification in such full, clear, concise, and exact terms so as to enable a person having ordinary skill in the art to practice the invention.

To achieve one or more of these and other advantages, according to one aspect of the present invention, there is provided an image forming apparatus having plural program runtime environments in which a program can be added to at least one of the plural program runtime environments. The image forming apparatus includes a storage unit in which usage acceptance information showing whether a resource of the image forming apparatus can be used by the program is stored in each of the program runtime environments, and a determining unit which determines whether the resource of the image forming apparatus can be used by the program to be executed in one of the plural program runtime environments based on the usage acceptance information.

### [Effect of the Invention]

According to an embodiment of the present invention, in an image forming apparatus, whether a resource in the image forming apparatus can be used by another program runtime environment is determined in each of the plural program runtime environments, and not in each of the programs. Therefore, the image forming apparatus can easily realize program access control.

### BRIEF DESCRIPTION OF THE DRAWINGS

Features and advantages of the present invention will become more apparent from the following detailed description when read in conjunction with the accompanying drawings, in which:
FIG. 1 is a first diagram showing a basic structure of a program runtime environment in an image forming apparatus according to an embodiment of the present invention;
FIG. 2 is a second diagram showing the basic structure of the program runtime environment in the image forming apparatus according to the embodiment of the present invention;
FIG. 3 is a diagram showing a structural example of an additional bundle management table according to the embodiment of the present invention;
FIG. 4 is a diagram showing the basic structure of the program runtime environment in the image forming apparatus when an additional bundle is installed in the image forming apparatus according to the embodiment of the present invention;
FIG. 5 is a diagram showing an updated example of the additional bundle management table when an additional bundle is installed in the image forming apparatus according to the embodiment of the present invention;;
FIG. 6 is a diagram showing mainly a software structure of the image forming apparatus according to the embodiment of the present invention;
FIG. 7 is a sequence chart showing processes when a bundle is installed in the image forming apparatus shown in FIG. 6;
FIG. 8 is a diagram showing a structure of a bundle according to the embodiment of the present invention;
FIG. 9 is a diagram showing a definition example of bundle information according to the embodiment of the present invention;
FIG. 10 is a diagram showing an updated example of the additional bundle management table corresponding to bundle types of the additional bundles according to the embodiment of the present invention;
FIG. 11 is a diagram showing processes for inspecting an additional bundle after installing the additional bundle in the image forming apparatus shown in FIG. 6;
FIG. 12 is a first sequence chart showing processes when a bridge section statically determines whether a bundle utilizes a function of another program runtime environment according to the embodiment of the present invention;
FIG. 13 is a second sequence chart showing processes when the bridge section statically determines whether a bundle utilizes a function of another program runtime environment according to the embodiment of the present invention;
FIG. 14 is a sequence chart showing processes to determine whether a bundle can use a function of another program runtime environment based on usage acceptance information shown in FIG. 8;
FIG. 15 is a sequence chart showing processes of a confidential document printing function before extension of a function in the image forming apparatus according to the embodiment of the present invention;
FIG. 16 is a diagram showing a first structure of the image forming apparatus when an additional bundle is added to the image forming apparatus according to the embodiment of the present invention;
FIG. 17 is a sequence chart showing processes of a confidential document printing function after extension of a first function according to the embodiment of the present invention;
FIG. 18 is a diagram showing a second structure of the image forming apparatus when an additional bundle is added to the image forming apparatus according to the embodiment of the present invention; and
FIG. 19 is a sequence chart showing processes of the confidential document printing function after extension of a second function according to the embodiment of the present invention.

### DESCRIPTION OF THE PREFERRED EMBODIMENT

### [Best Mode of Carrying Out the Invention]

The best mode of carrying out the present invention is described with reference to the accompanying drawings.

In an embodiment of the present invention, as an image forming apparatus, an MFP (multifunctional peripheral) is used. The MFP realizes plural functions such as a printing function, a copying function, a scanning function, and a facsimile function in one cabinet. However, the image forming apparatus is not limited to the MFP.

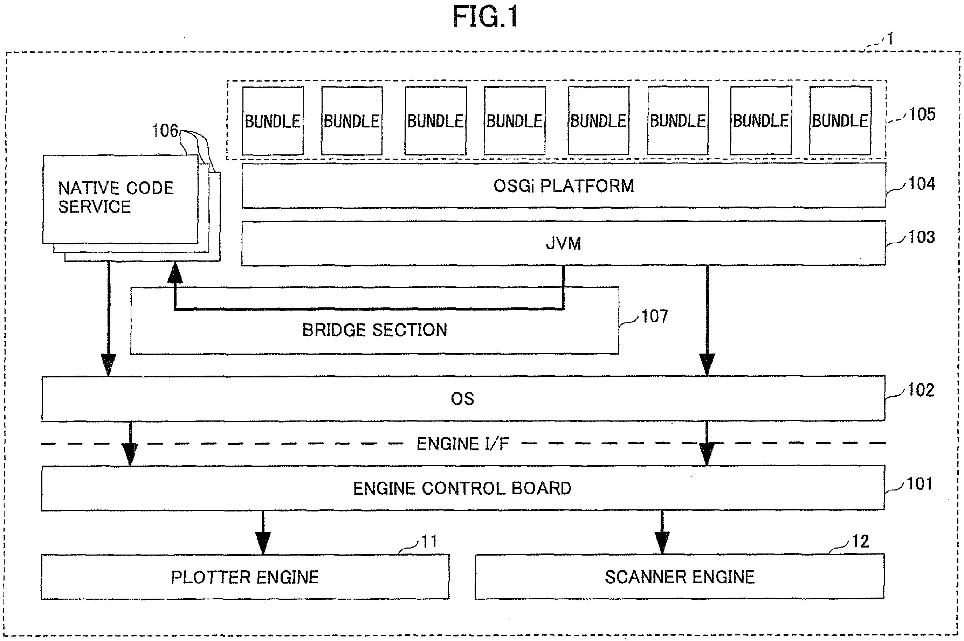

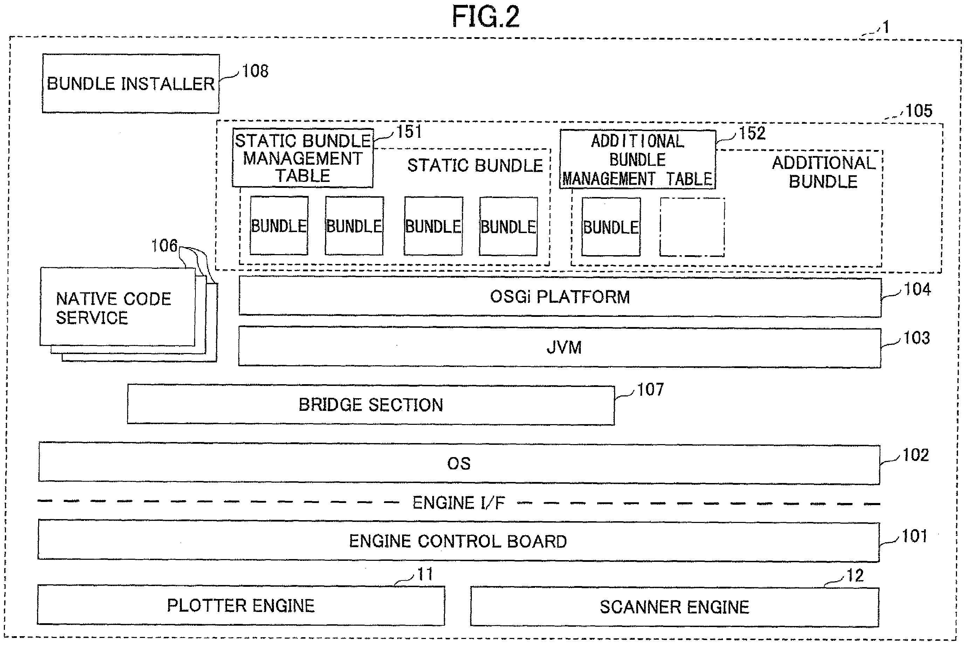

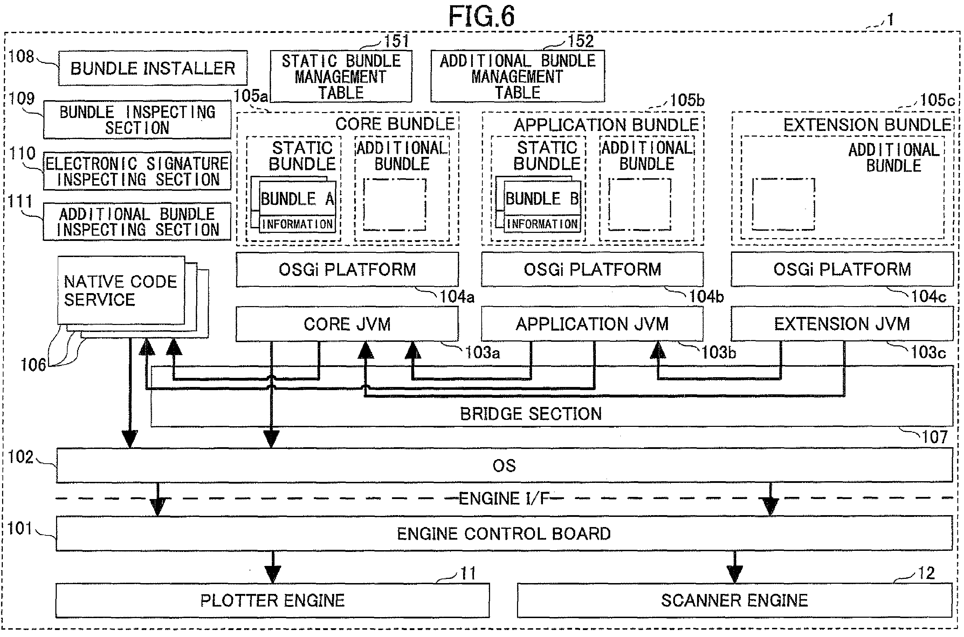

FIG. 1 is a first diagram showing a basic structure of a program runtime environment in a MFP according to the embodiment of the present invention. FIG. 2 is a second diagram showing the basic structure of the program runtime environment in the MFP according to the embodiment of the present invention. FIG. 6 is a diagram showing mainly a software structure of the MFP according to the embodiment of the present invention. In order to make understanding of a software structure shown in each of FIGs. 1, 2, and 6 in the MFP easy, parts of the software structure are sequentially described by focusing on each of the parts of the structure.

In FIG. 1, as a part of hardware resources of an MFP 1, a plotter engine 11 and a scanner engine 12, and as a part of software resources of the MFP 1, an engine control board 101, an OS (operating system) 102, a JVM (Java virtual machine) 103, an OSGi (open services gateway initiative) platform 104, bundles (programs) 105, native code services 106, and a bridge section 107 are shown. The software resources are stored in a storage unit (not shown) of the MFP 1 and functions of the software resources are realized when the MFP 1 causes a CPU (central processing unit) (not shown) to executes predetermined processes of the software resources.

The engine control board 101 controls functions of the plotter engine 11 and the scanner engine 12 and supplies functions of the engine control board 101 to the OS 102 via an engine I/F (interface).

The OS 102 starts up the JVM 103 and each of the native code services 106 in parallel as processes. The JVM 103 converts byte code of a JAVA unique language into native code which can be run on the OS 102 and the OS 102 executes the native code. The OSGi platform 104 is a standard technology of the OSGi Alliance and is a software platform which supplies a runtime environment for a software component created by open software component technology based on the JAVA language. A JAVA language software component is installed on the OSGi platform 104 as a software component called "bundle". One bundle is formed of one JAR (Java archive) file and each of the bundles can be independently installed dynamically (without restarting the apparatus). As shown in FIG. 1, the plural bundles 105 can be installed.

The native code service 106 is a program created in native code, for example, C language which is directly run on the OS 102, and as shown in FIG. 1, plural native code services 106 can exist. Each of the native code services 106 realizes a function to be commonly utilized by the plural bundles 105.

The bridge section 107 realizes call up between different program runtime environments. In FIG. 1, the bridge section 107 realizes call up of a native service code 106 to be utilized by a bundle 105 which is started up as a thread on the JVM 103. In the call up, for example, a JNI (Java native interface) can be used. In the embodiment of the present invention, a program runtime environment on the JVM 103 is called a JVM environment. In addition, a program runtime environment related to the native code service 106 is called a native environment (that is, a program runtime environment to be directly run on the OS 102).

In FIG. 1, the JVM environment and the native environment can independently control the hardware resources via the OS 102 and the engine control board 101. In addition, the native environment can be called up from the JVM environment; therefore, the JVM environment can control the hardware resources via the native environment.

In FIG. 2, when an element is similar to or the same as the element shown in FIG. 1, the same reference number as that shown in FIG. 1 is used for the element and the same description as that related to FIG. 1 is omitted.

As shown in FIG. 2, the bundles 105 shown in FIG. 1 are classified into static bundles and additional bundles. The static bundles have been installed in the MFP 1 by the manufacturer of the MFP 1 before delivering the MFP 1 to a customer, and mainly supply basic functions (basic application software) of the MFP 1. Basically, uninstalling of the static bundles is restricted. The additional bundles are installed after delivering the MFP 1 to the customer. Therefore, the additional bundles can be installed and uninstalled at arbitrarily timings.

In order to identify the classification of the bundles 105, a static bundle management table 151 and an additional bundle management table 152 are stored in the storage unit of the MFP 1 as information of the classification. In FIG. 2, the static bundle management table 151 and the additional bundle management table 152 are in the bundles 105; however, the tables are not bundles. In the static bundle management table 151, information for identifying the static bundles 105 is stored, and in the additional bundle management table 152, information for identifying the additional bundles 105 is stored. A bundle installer 108 is described below.

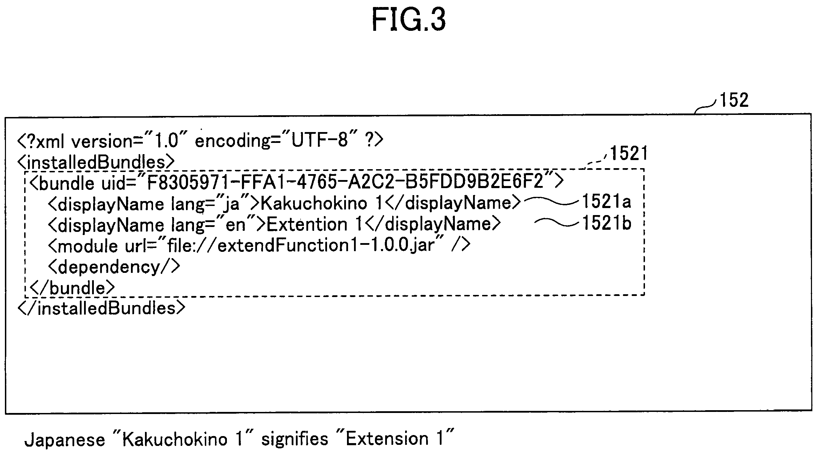

FIG. 3 is a diagram showing a structural example of the additional bundle management table 152. The format of the additional bundle management table 152 is not limited to that shown in FIG. 3. In FIG. 3, the additional bundle management table 152 is described in XML (extensible markup language).

In FIG. 3, in the additional bundle management table 152, bundle elements of each installed bundle 105 are described as sub elements of "installedBundles" elements sandwiched between <installedBundles> tags. In FIG. 3, one bundle element 1521 only is described. That is, this shows that one additional bundle 105 has been installed.

As the sub elements of the bundle element, a displayName element, a module element, a dependency element, and so on are included. The value of the displayName element shows a display character string. For example, the display character string is used to display a list of usable applications (the bundles 105) on an operating panel (not shown) of the MFP 1. The displayName element can be described corresponding to each language. The language corresponding to the displayName element can be identified by a "lang attribute".

In FIG. 3, the lang attribute of a displayName element 1521a is "ja". Therefore, the value "Kakuchokino 1 (Extension 1 in English) " of the displayName element 1521a is identified to be a Japanese character string. In addition, the lang attribute of a displayName element 1521b is "en". Therefore, the value "Extension 1" of the displayName element 1521b is identified to be an English character string.

The value of the module element shows a file name of the bundle 105. The value of the dependency element shows a dependent relationship

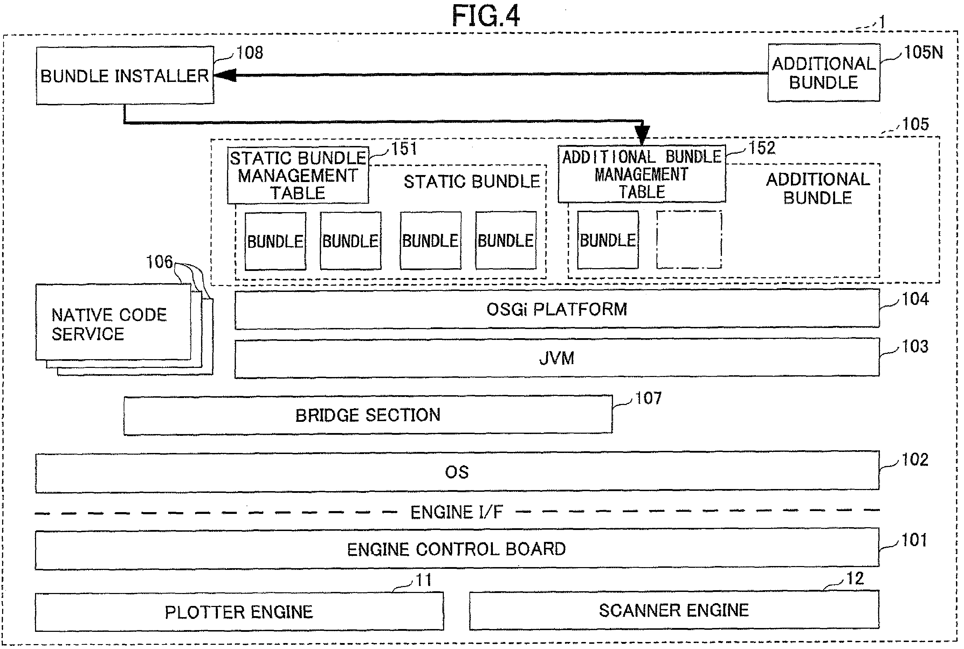

FIG. 4 is a diagram showing a basic structure of a program runtime environment in the MFP 1 when an additional bundle is installed in the MFP 1. In FIG. 4, when an element is similar to or the same as the element shown in FIG. 2, the same reference number as that shown in FIG. 2 is used for the element and the same description as that related to FIG. 2 is omitted. In FIG. 4, an additional bundle 105N is newly installed in the MFP 1. In this case, the bundle installer 108 stores a file of the additional bundle 105N in a predetermined storage position (folder) of the storage unit of the MFP 1 and also stores information of the additional bundle 105N in the additional bundle management table 152.

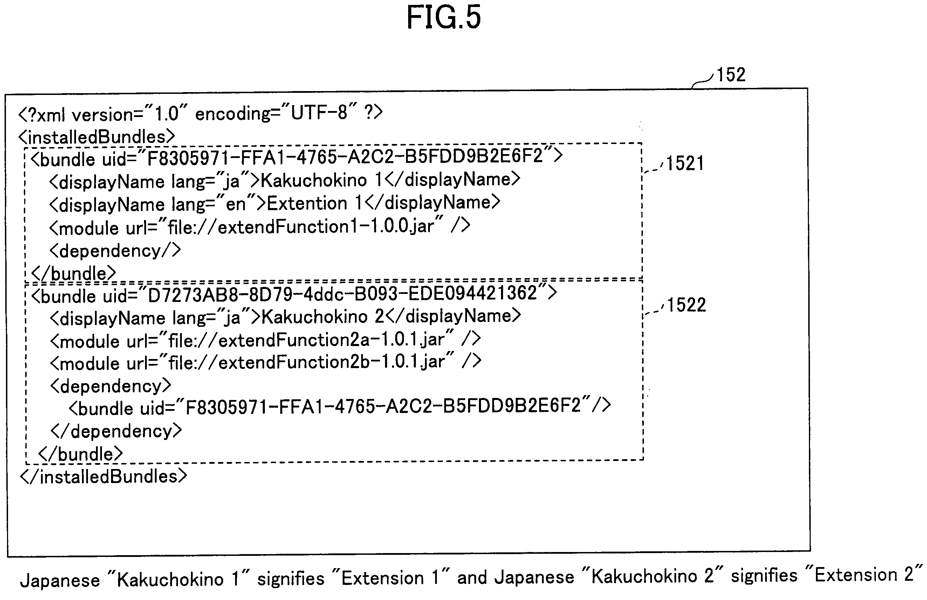

FIG. 5 is a diagram showing an updated example of the additional bundle management table 152 when an additional bundle is installed in the MFP 1. In FIG. 5, when an element is similar to or the same as the element shown in FIG. 3, the same reference number as that shown in FIG. 3 is used for the element and the same description as that related to FIG. 3 is omitted. In the additional bundle management table 152 shown in FIG. 5, a bundle element 1522 is newly added. The bundle element 1522 is a description (definition) corresponding to the additional bundle 105N.

Next, based on the basic structure of the MFP 1 described above and referring to FIG. 6, the software structure of the program runtime environments of the MFP 1 is described. In FIG. 6, when an element is similar to or the same as the element shown in FIG. 2, the same reference number as that shown in FIG. 2 is used for the element and the same description as that related to FIG. 2 is omitted.

As shown in FIG. 6, the MFP 1 includes three JVMs 103, namely a core JVM 103a, an application JVM 103b, and an extension JVM 103c. The MFP 1 includes an OSGi platform 104a and a core bundle 105a for the core JVM 103a, an OSGi platform 104b and an application bundle 105b for the application JVM 103b, and an OSGi platform 104c and an extension bundle 105c for the extension JVM 103c. In each of the bundles 105a, 105b, and 105c, plural bundles exist. That is, plural runtime environments 103a, 103b, and 103c are provided.

Basically, the functions (implementations) of the JVMs 103a, 103b, and 103c are the same. However, an access right regarding another JVM environment or the native environment is different for each of the JVMs 103a, 103b, and 103c. Specifically, the core JVM (runtime environment) 103a supplies a runtime environment to a core bundle 105a having highest reliability created by, for example, the manufacturer of the MFP 1. The core bundle 105a can directly call up (utilize) all functions which are supplied from the native code services 106 and the engine control board 102 via the bridge section 107. However, the utilization of the native code services 106 and the engine control board 102 by the core bundle 105a can be also restricted.

The application JVM (runtime environment) 103b supplies a runtime environment to an application bundle 105b which has reliability lower than the reliability of the core bundle 105a or whose access right to the resources of the MFP 1 is restricted. The application bundle 105b can directly call up (utilize) the functions which are supplied from the native code services 106 via the bridge section 107. However, the utilization of the native code services 106 by the application bundle 105b is more restricted than the utilization by the core bundle 105a. In addition, the application bundle 105b can directly call up (utilize) all or a part of the functions of the core bundle 105a via the bridge section 107.

That is, the bridge section 107 supports the calling up of the native environment from the JVM environment and also supports the calling up between different JVM environments. The calling up between the different JVM environments can be performed by an existing procedure using, for example, IPC (interprocess communication). The application bundle 105b cannot directly utilize the function of the engine control board 101.

The extension JVM (runtime environment) 103c supplies a runtime environment to an extension bundle 105c which has reliability lower than the reliability of the application bundle 105b or whose access right to the resources of the MFP 1 is more restricted than the access right by the application JVM 103b. The extension bundle 105c can directly call up (utilize) the functions of the core bundle 105a and the application bundle 105b via the bridge section 107 within a predetermined restricted range. However, the extension bundle 105c cannot directly utilize the functions of the native code services 106.

As described above, in the MFP 1, the access rights of the bundles 105a, 105b, and 105c to the resources of the MFP 1 are controlled by the corresponding JVM environments of the JVMs 103a, 103b, and 103c. In FIG. 6, the three JVMs 103a, 103b, and 103c are shown. Therefore, the security of the bundles 105a, 105b, and 105c can be classified into three levels depending on their using JVMs 103a, 103b, 103c. Therefore, in the embodiment of the present invention, access control of each application in the MFP 1 can be more easily performed than a case where the access right in the MFP 1 is controlled in each bundle 105.

The number of the JVMs 103 can be 2, or 4 or more corresponding to the specifications of the hardware resources of the MFP 1. When the number of the JVMs is two, two security levels can be established, and when the number of the JVMs is four, four security levels can be established.

As shown in FIG. 6, the core bundle 105a and the application bundle 105b can include corresponding static and additional bundles. However, the extension bundle 105c does not include a static bundle. That is, the extension bundles 105c are installed in the MFP 1 as additional bundles. However, the structure shown in FIG. 6 is an example, and the extension bundles 105c can include a static bundle.

As shown in FIG. 6, the MFP 1 further includes a bundle inspecting section 109, an electronic signature inspecting section 110, and an additional bundle inspecting section 111. These sections are described below in detail.

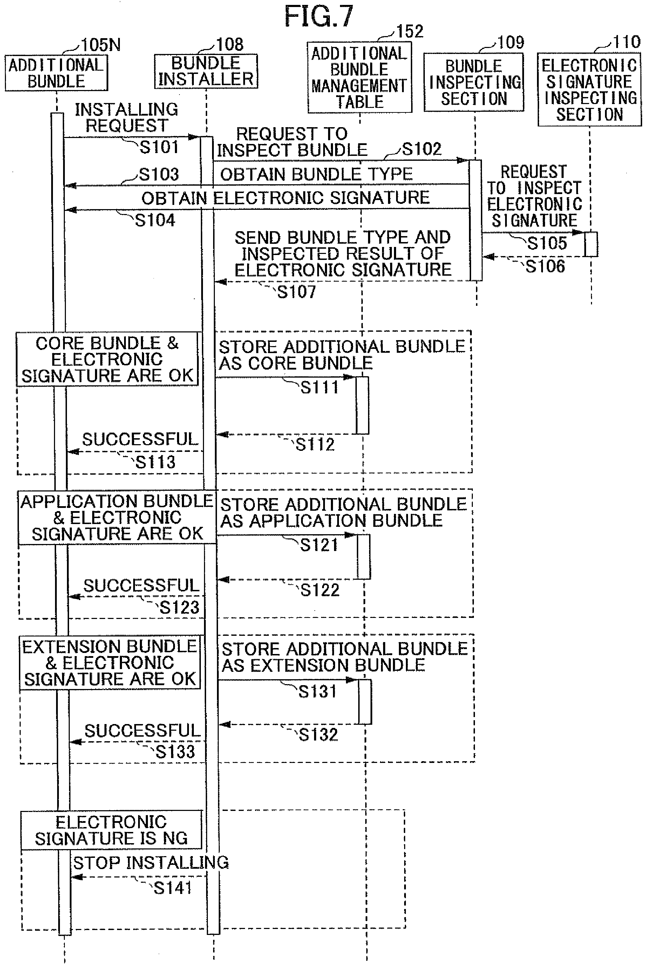

Next, referring to FIG. 7, processes are described when a bundle is installed in the MFP 1 shown in FIG. 6. FIG. 7 is a sequence chart showing the processes when a bundle is installed in the MFP 1 shown in FIG. 6. In the following, in some cases, an additional bundle is shown by an additional bundle 105N.

First, the MFP 1 receives an installation request for an additional (new) bundle 105N which is input on, for example, the operating panel of the MFP 1 by a user (S101), and the bundle installer 108 requests the bundle inspecting section 109 to inspect the additional bundle 105N (S102).

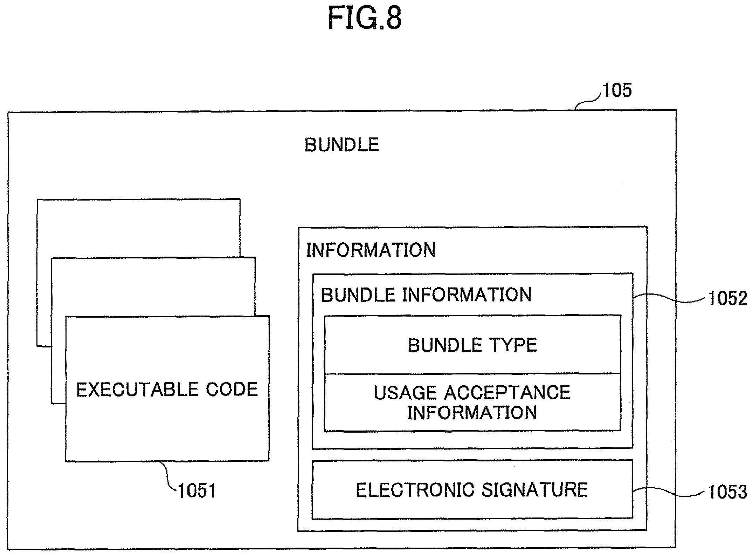

FIG. 8 is a diagram showing a structure of a bundle according to the embodiment of the present invention. As shown in FIG. 8, the bundle 105 is a JAR file in which one or more executable codes 1051, bundle information 1052, an electronic signature 1053, and so on are compressed as a zip file. The executable code 1051 is a class file of a program. The electronic signature 1053 is signature data to detect falsification of the executable code 1051 or the bundle information 1052, and is, for example, data in which hash values of the executable code 1051 and the bundle information 1052 are encrypted (encoded). The bundle information 1052 includes a bundle type and usage acceptance information. The bundle type shows information whether the additional bundle 105N belongs to the core bundle 105a, the application bundle 105b, or the extension bundle 105c; and the core bundle 105a, the application bundle 105b, and the extension bundle 105c are shown by "core", "application", and "extension", respectively. The usage acceptance information shows the band type when the usage of the bundle 105 is accepted.

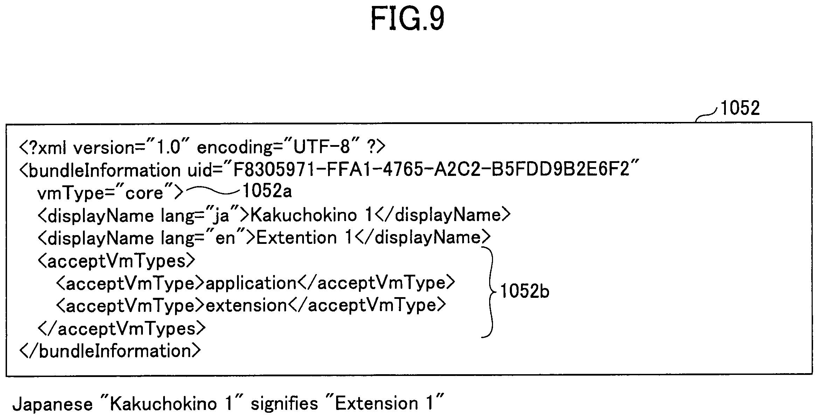

FIG. 9 is a diagram showing a definition example of the bundle information 1052. In FIG. 9, the bundle information is described in an XML format.

In FIG. 9, a value of a vmType attribute of a bundleInformation tag 1052a corresponds to the bundle type. In FIG. 9, the bundle type is "core" (the core bundle 105a). A value of an acceptVmType element which is a sub element of an acceptVmTypes element 1052b corresponds to the usage acceptance information. In the example shown in FIG. 9, "application" and "extension" are designated by the two acceptVmType elements. This signifies that the usage of the MFP 1 from the application bundle 105b and the extension bundle 105c is accepted.

Returning to FIG. 7, the bundle inspecting section 109 obtains the bundle type (S102) from the bundle information 1052 and the electronic signature 1053 (S103) of the additional bundle 105N, and requests the electronic signature inspecting section 110 to inspect the additional bundle 105N based on the electronic signature 1053 (S105). The electronic signature inspecting section 110 inspects the additional bundle 105N based on the electronic signature 1053 and returns the inspection result to the bundle inspecting section 109 (S106). In the inspection, for example, the hash values of the executable code 1051 and the bundle information 1052 are collated with a value in which the electronic signature is decrypted (decoded). With this, it is inspected to determine whether or not only the executable code 1051 but also the bundle type are falsified.

Next, the bundle inspecting section 109 sends the bundle type of the additional bundle 105N and the inspection result (falsified or not) by the electronic signature inspecting section 110 to the bundle installer 108 (S107). The bundle installer 108 changes the processes based on the sent bundle type and the inspection result.

For example, when the bundle type is "core" (the additional bundle 105N is a core bundle 105a) and the inspection result is OK (no falsification), the bundle installer 108 stores the additional bundle 105N as an additional core bundle 105a in the additional bundle management table 152 (S11 and S112). That is, installing the additional bundle 105N is successful (S113).

In addition, when the bundle type is "application" (the additional bundle 105N is an application bundle 105b) and the inspection result is OK (no falsification), the bundle installer 108 stores the additional bundle 105N as an additional application bundle 105b in the additional bundle management table 152 (S121 and S122). That is, installing the additional bundle 105N is successful (S123).

In addition, when the bundle type is "extension" (the additional bundle 105 is an extension bundle 105c) and the inspection result is OK (no falsification), the bundle installer 108 stores the additional bundle 105N as an additional extension bundle 105c in the additional bundle management table 152 (S131 and S132). That is, installing the additional bundle 105N is successful (S133).

When the inspection result is NG (the electronic signature may be falsified), the bundle installer 108 stops installing the additional bundle 105N (S141).

When the additional bundle 105N is installed in the MFP 1, the additional bundle management table 152 is updated.

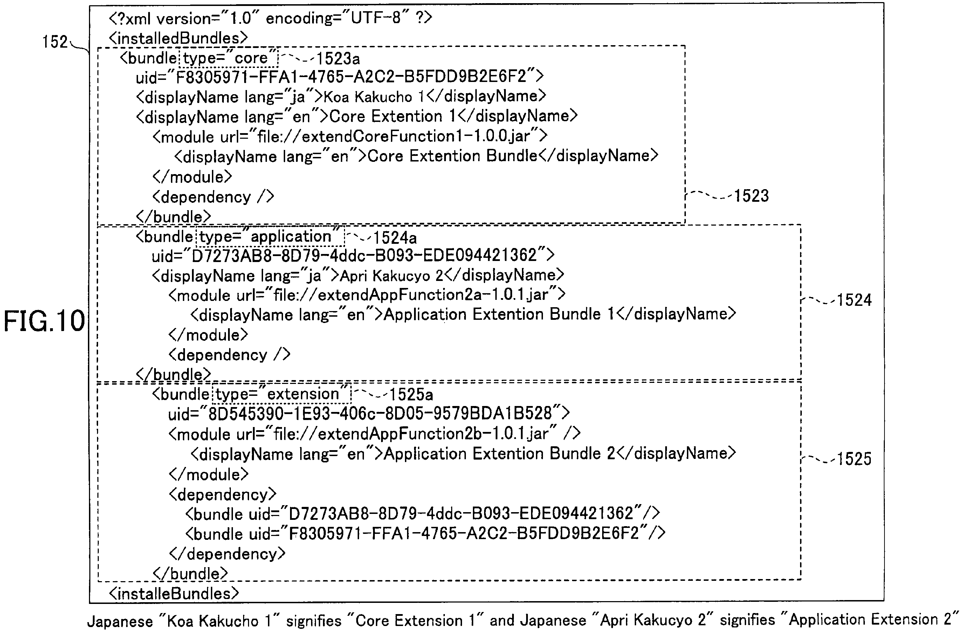

FIG. 10 is a diagram showing an updated example of the additional bundle management table 152 corresponding to bundle types of the additional bundles 105.

The structure of the additional bundle management table 152 shown in FIG. 10 is substantially the same as the structure shown in FIG. 3. However, in FIG. 10, a type attribute is added to each bundle element for identifying a bundle type of the additional bundle 105. For example, a value of a type attribute 1523a of a bundle element 1523 is "core". Therefore, when a core bundle 105a is newly installed in the MFP 1, a description shown in the bundle element 1523 is added.

In addition, a value of a type attribute 1524a of a bundle element 1524 is "application". Therefore, when an application bundle 105b is newly installed in the MFP 1, a description shown in the bundle element 1524 is added.

In addition, a value of a type attribute 1525a of a bundle element 1525 is "extension". Therefore, when an extension bundle 105c is newly installed in the MFP 1, a description shown in the bundle element 1525 is added.

When an additional bundle 105N is installed in the MFP 1, since the bundle type and so on of the additional bundle 105N is inspected for falsification, the falsification of the bundle type and so on of the additional bundle 105N during the distribution process of the additional bundle 105N can be detected. Therefore, an additional bundle 105N to be installed as an extension bundle 105c is prevented from being installed as a core bundle 105a or an application bundle 105b, and the security level established in each JVM environment can be suitably maintained.

In FIG. 7, when the additional bundle 105N is installed in the MFP 1, the additional bundle 105N is inspected based on the electronic signature 1053. However, the inspection can be performed at a predetermined timing after installing the additional bundle 105N, for example, at loading (utilizing) the additional bundle 105N.

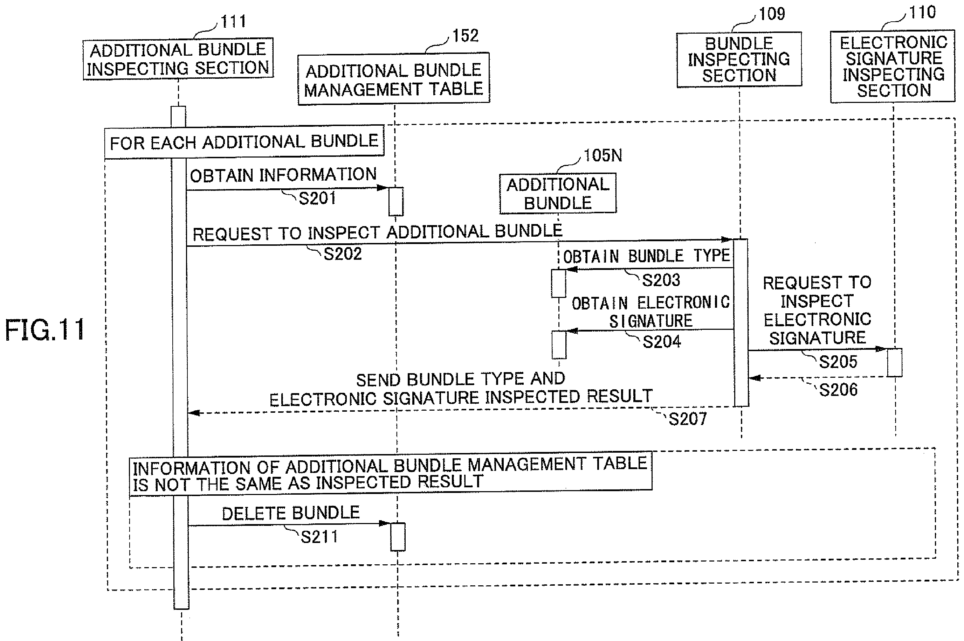

FIG. 11 is a diagram showing processes for inspecting an additional bundle 105N after installing the additional bundle 105N in the MFP 1. The processes shown in FIG. 11 are performed for each additional bundle 105N installed in the MFP 1.

The additional bundle inspecting section 111 obtains information (bundle element) of one additional bundle 105N from the additional bundle management table 152 at predetermined timing (S201). Next, the additional bundle inspecting section 111 requests the bundle inspecting section 109 to inspect the bundle element of the additional bundle 105N (S202). Processes from S203 through S206 are the same as the processes from S103 through S106 shown in FIG. 7, respectively.

Next, the bundle inspecting section 109 sends the bundle type of the additional bundle 105N and the inspection result (falsified or not) by the electronic signature inspecting section 110 to the additional bundle inspecting section 111 (S207). When the sent bundle type is not the same as the value of the type attribute of the bundle element obtained from the additional bundle management table 152 or the inspection result has a problem (may be falsified), the additional bundle inspecting section 111 deletes the additional bundle 105N (S211).

As described above, when the processes shown in FIG. 11 are performed at the predetermined timing after installing the additional bundle 105N, the falsification of the bundle type after installing the additional bundle 105N can be detected. Therefore, an additional bundle 105N to be installed as an extension bundle 105c is prevented from being installed as a core bundle 105a or an application bundle 105b, and the security level established in each JVM environment can be suitably maintained.

Next, processes are described when a bundle 105, which is run in a JVM environment, requests to perform a function in a native environment or another JVM environment.

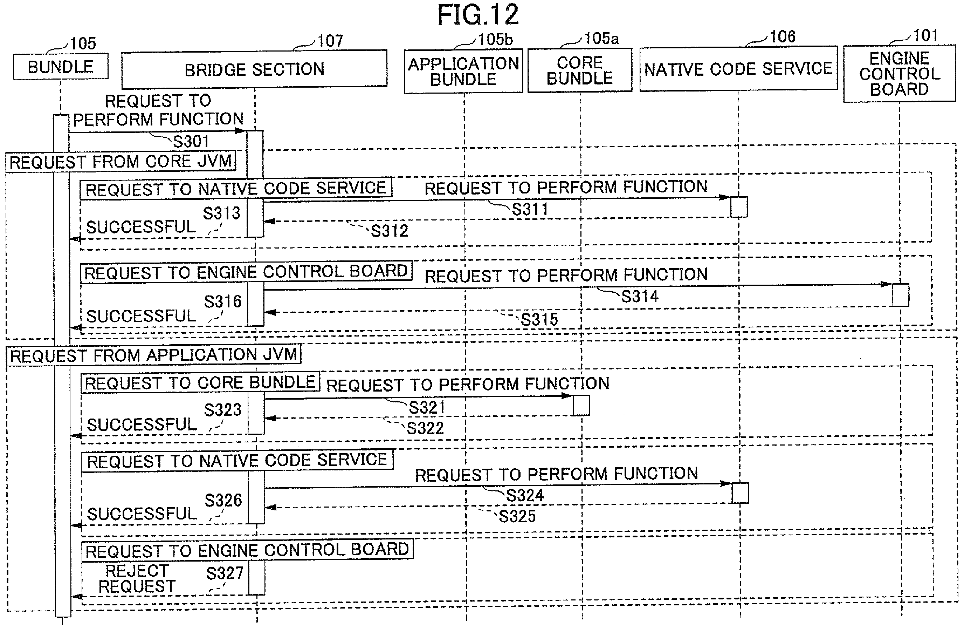

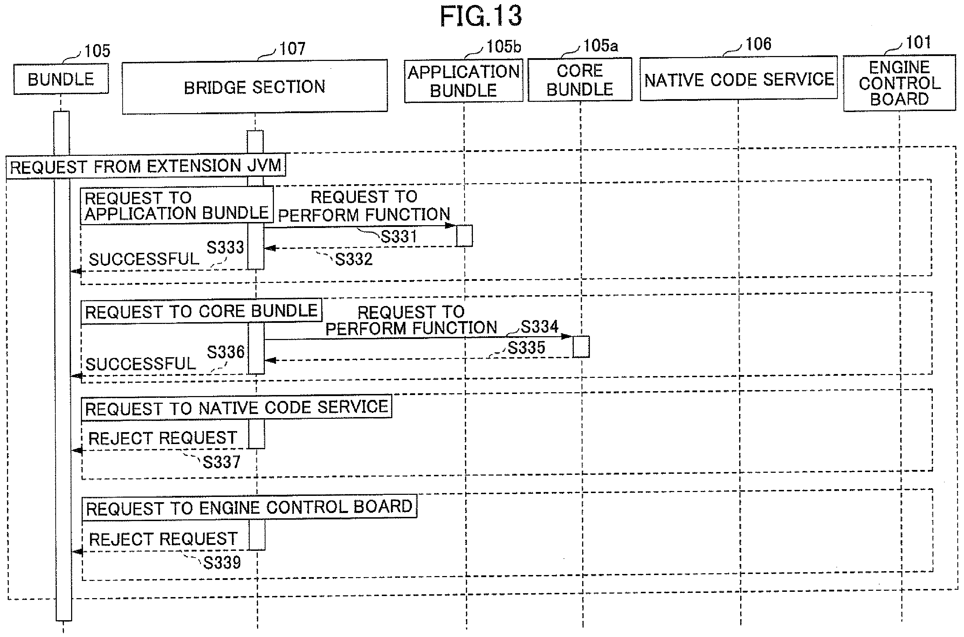

FIG. 12 is a first sequence chart showing processes when the bridge section 107 statically determines whether a bundle 105 may utilize a function of another program runtime environment. FIG. 13 is a second sequence chart showing processes when the bridge section 107 statically determines whether a bundle 105 may utilize a function of another program runtime environment. That is, in FIGs. 12 and 13, a case is described in which calling up of the program runtime environment (the JVM environment or the native environment) is logically restricted in the bridge section 107. In other words, in this case, the restriction is stored in a program of the bridge section 107.

In FIG. 12, a bundle 105 requests the bridge section 107 to perform a function of another program runtime environment (S301). When the bundle 105 is a core bundle 105a and the function to be performed by the request is in the native code service 106, the bridge section 107 sends the request to the native code service 106 (S311). The native code service 106 performs processes of the requested function and sends the processing result to the bundle 105 via the bridge section 107 (S312 and S313).

When the bundle 105 is a core bundle 105a and the function to be performed by the request is in the engine control board 101, the bridge section 107 sends the request to the engine control board 101 (S314). The engine control board 101 performs processes of the requested function and sends the processing result to the bundle 105 via the bridge section 107 (S315 and S316).

When the bundle 105 is an application bundle 105b and the function to be performed by the request is in the core bundle 105a, the bridge section 107 sends the request to the core bundle 105a (S321). The core bundle 105a performs processes of the requested function and sends the processing result to the bundle 105 via the bridge section 107 (S322 and 5323).

When the bundle 105 is an application bundle 105b and the function to be performed by the request is in the native code service 106, the bridge section 107 sends the request to the native code service 106 (S324). The native code service 106 performs processes of the requested function and sends the processing result to the bundle 105 via the bridge section 107 (S325 and S326).

When the bundle 105 is an application bundle 105b and the function to be performed by the request is in the engine control board 101, the bridge section 107 rejects sending the request to the engine control board 101 (S327). Therefore, the bundle 105 cannot directly utilize the function of the engine control board 101.

Next, in FIG. 13, when the bundle 105 is an extension bundle 105c and the function to be performed by the request is in the application bundle 105b, the bridge section 107 sends the request to the application bundle 105b (S331). The application bundle 105b performs processes of the requested function and sends the processing result to the bundle 105 via the bridge section 107 (S331 and S332).

When the bundle 105 is an extension bundle 105c and the function to be performed by the request is in the core bundle 105a, the bridge section 107 sends the request to the core bundle 105a (S334). The core bundle 105a performs processes of the requested function and sends the processing result to the bundle 105 via the bridge section 107 (S335 and S336).

When the bundle 105 is an extension bundle 105c and the function to be performed by the request is in the native code service 106, the bridge section 107 rejects sending the request to the native code service 106 (S337). Therefore, the bundle 105 cannot directly utilize the function of the native code service 106.

When the bundle 105 is an extension bundle 105c and the function to be performed by the request is in the engine control board 101, the bridge section 107 rejects to send the request to the engine control board 101 (S339). Therefore, the bundle 105 cannot directly utilize the function of the engine control board 101.

The bridge section 107 determines in which JVMs (the core JVM 103a, the application JVM 103b, and the extension JVM 103c) the bundle 105 is run based on the bundle type of the bundle 105. Or the bundle 105 which requests to perform a function informs the bridge section 107 of the bundle type of the bundle 105.

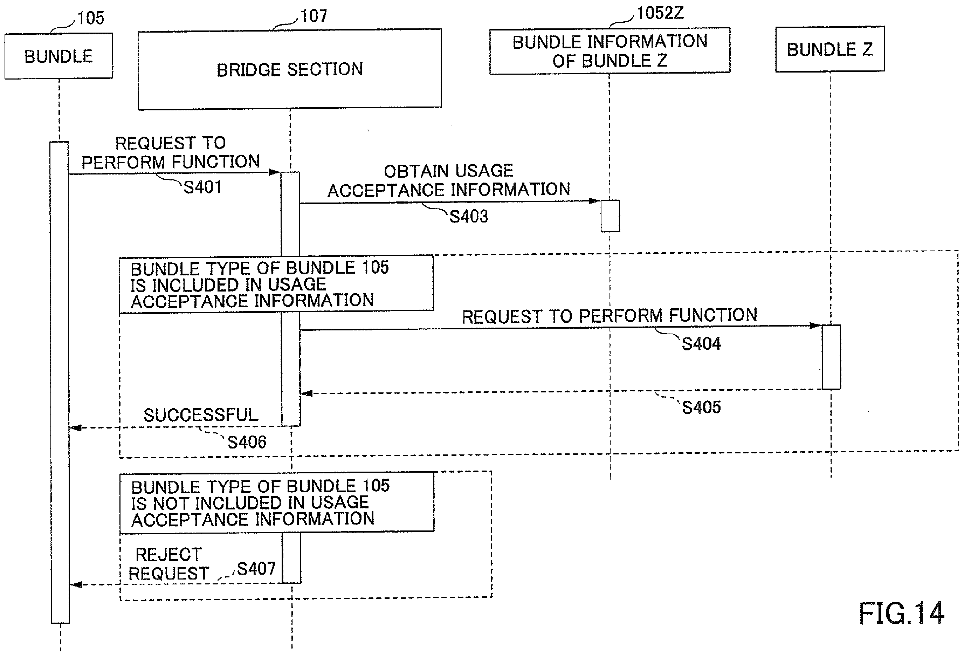

FIG. 14 is a sequence chart showing processes to determine whether a bundle can use a function of another program runtime environment based on usage acceptance information.

First, a bundle 105 requests the bridge section 107 to perform a function of another program runtime environment (S401). The bridge section 107 obtains usage acceptance information from bundle information 1052z of a bundle Z to be performed by the request (see FIGs. 8 and 9) (S403). When the bundle type of the bundle 105 (request source) is included in the usage acceptance information, the bridge section 107 sends the request to the bundle Z (S404). The bundle Z performs processes of the requested function and sends the processing result to the bundle 105 via the bridge section 107 (S405 and S406).

When the bundle type of the bundle 105 (request source) is not included in the usage acceptance information, the bridge section 107 rejects sending the request to the bundle Z (S407). Therefore, the bundle 105 cannot directly utilize the bundle Z.

Next, processes to be performed in the MFP 1 are described by using a specific example of a function to be performed by a bundle 105. First, a case is described in which only static bundles have been installed in the MFP 1 (function extension by installing an additional bundle has not been performed).

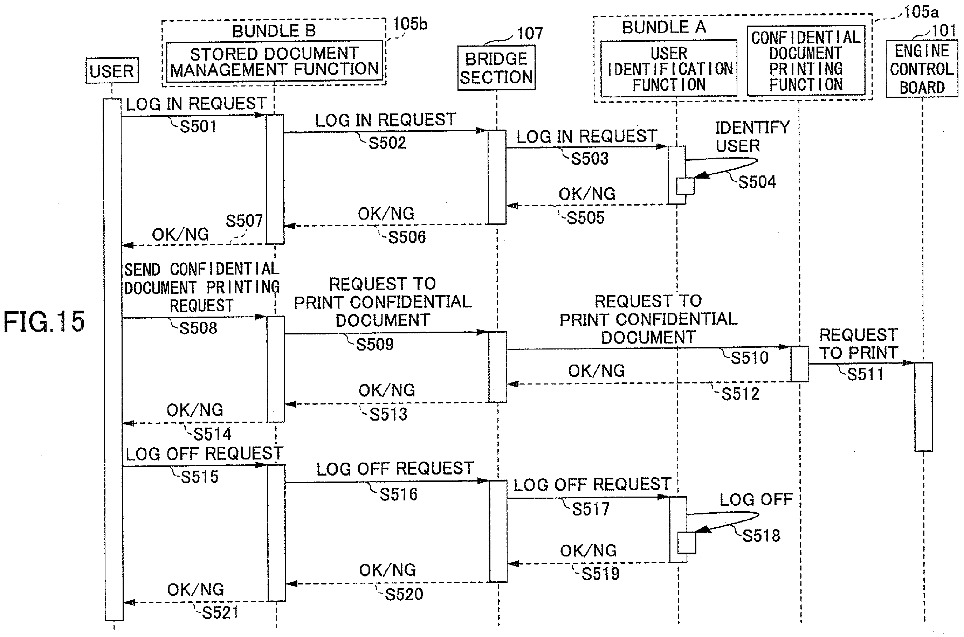

FIG. 15 is a sequence chart showing processes of a confidential document printing function before extension of a function in the MFP 1. In the confidential document printing function, when document data or image data (stored data or stored document) which have been stored in an HDD (not shown) or so on of the MFP 1 are printed, the stored document is printed by adding information (for example, a tint pattern) for preventing duplication. In FIG. 15, a bundle B is one of static bundles of application bundles 105b (see FIG. 6), and realizes a stored document management function. The stored document management function manages the document data and the image data which have been stored in the HDD or so on of the MFP 1. In addition, a bundle A is one of static bundles of core bundles 105a (see FIG. 6), and realizes a user identification function and the confidential document printing function.

First, a user requests to log in to the bundle B on a screen of an operating panel of the MFP 1 (S501). The log in request corresponds to a selection of a button corresponding to the bundle B displayed on the screen. The bundle B sends the log in request to the bundle A via the bridge section 107 (S502 and S503). For example, the bundle A causes the operating panel to display a screen to which identification information (for example, user name and user password) is input on the operating panel, and identifies the user based on the identification information (S504). The bundle A sends the identification result (OK or NG) to the bundle B via the bridge section 107 (S505 and S506). The bundle B causes the operating panel to display the identification result and informs the user of the identification result (S507).

When the identification result is successful (OK), the user selects document data to be printed from the stored data, and inputs the confidential document printing request of the document data on the operating panel. The confidential document printing request is sent to the bundle B (S508). The bundle B takes out the document data to be printed from the HDD and requests the bundle A to print the document data as the confidential document data via the bridge section 107 (S509 and S510). The bundle A applies a process for preventing duplication of a document to the confidential document and requests the engine control board 101 to print the confidential document (S511). The bundle A sends whether the confidential document is printed (OK or NG) to the bundle B via the bridge section 107 (S512 and S513). The bundle B causes the operating panel to display the printed result (OK or NG) (S514).

Next, when the user inputs a log off request (S515), the bundle B sends the log off request to the bundle A via the bridge section 107 (S516 and S517). The bundle A performs a log off process (S518), and sends the log off result to the bundle B via the bridge section 107 (S519 and S520). The bundle B causes the operating pnael to display the log off result (S521).

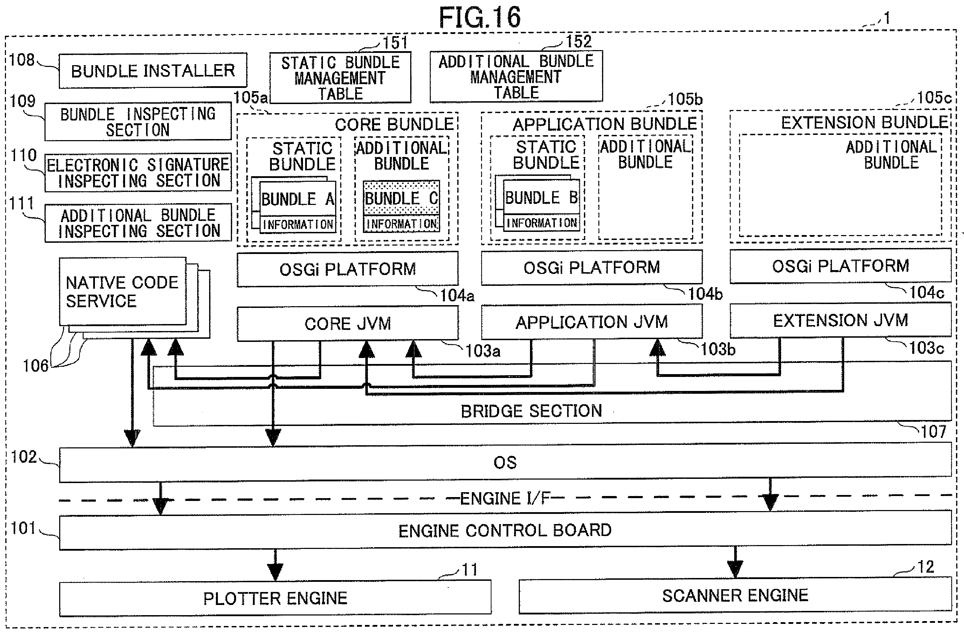

Next, an example is described in which the confidential document printing function is strengthened by adding an additional bundle. FIG. 16 is a diagram showing a first structure of the MFP 1 when an additional bundle is added to the MFP 1. When the diagram shown in FIG. 16 is compared with the diagram shown in FIG. 6, in FIG. 16, a bundle C is added as an additional bundle of the core bundle 105a. The bundle C provides an extension function of the user identification function. For example, the bundle C provides an identification function different from the identification function of the bundle A, for example, biometric identification. The bundle C is installed in the MFP 1 based on a specification stipulated at an extension point of the bundle A.

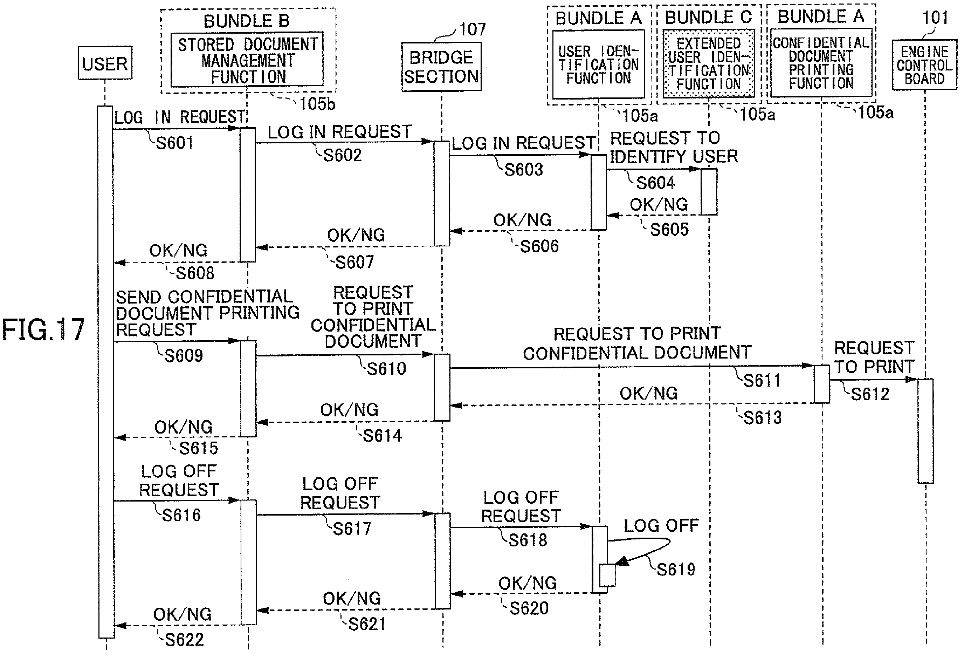

Processes are described when the bundle C is added. FIG. 17 is a sequence chart showing processes of the confidential document printing function after extension of a first function (the bundle C).

In FIG. 17, processes in S601 through S603 are the same as the corresponding processes in S501 through S503 shown in FIG. 15, respectively. When the bundle A detects the bundle C installed based on a stipulated specification, for example, detects the bundle C having a stipulated name in a stipulated folder, the bundle A request to identify the user (S604). The bundle C causes the operating panel to display a screen so as to input identification information (for example, biometric information), and identifies the user based on identification information input by an identification reading device (for example, a fingerprint reading device) attached to the MFP 1. Then the bundle C sends the identification result (OK or NG) to the bundle A (S605). Processes in S606 through S622 are the same as the corresponding processes S505 through S521 shown in FIG. 15, respectively.

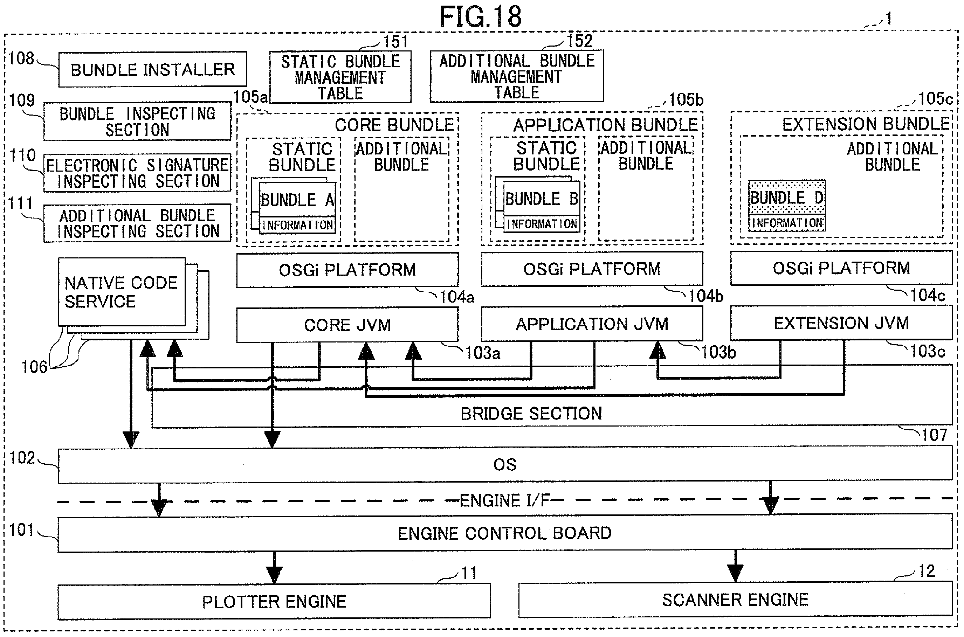

FIG. 18 is a diagram showing a second structure of the MFP 1 when an additional bundle is added to the MFP 1. When the diagram shown in FIG. 18 is compared with the diagram shown in FIG. 6, in FIG. 18, a bundle D is added as an additional bundle of the extension bundle 105c. The bundle D causes the newest document data of the document data stored by a current user in the MFP 1 to be automatically printed data as the confidential document data without using a selection process by the user.

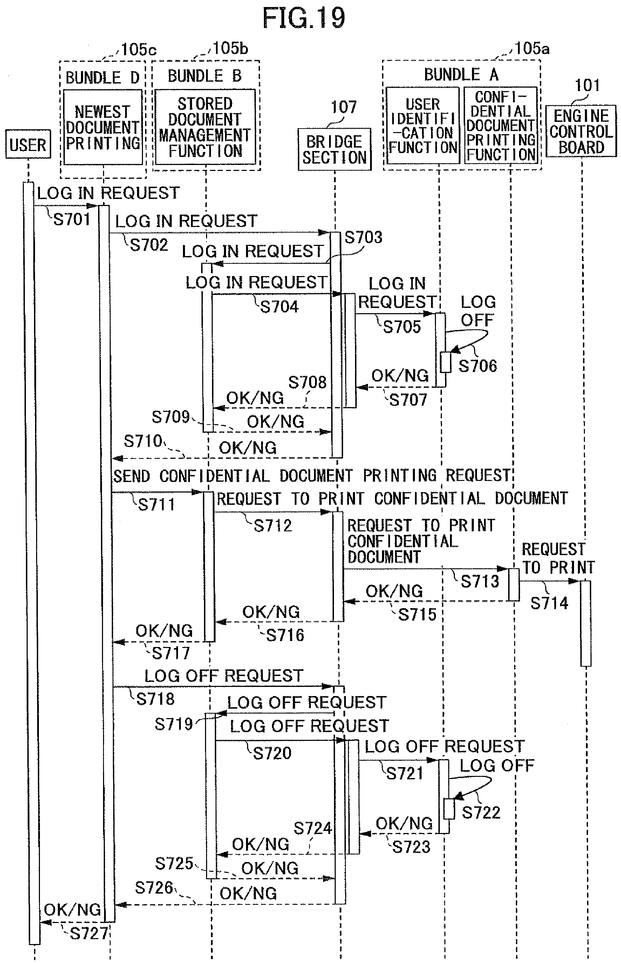

Processes are described when the bundle D is added. FIG. 19 is a sequence chart showing processes of the confidential document printing function after extension of a second function (the bundle D).

First, a user performs a log in request to the bundle D via a screen displayed on operating panel (S701). The bundle D sends the log in request to the bundle B which manages stored document data via the bridge section 107 (S702 and S703). Processes in S701 through S708 are the same as the processes in S502 through S506 shown in FIG. 15. The bundle B sends the identification result (OK or NG) to bundle D via the ridge section 107 (S709 and S710).

When the user is identified, the bundle D requests the bundle B to print the newest document data of the current user as the confidential document (S711). The bundle B takes out the newest document data of the current user from the HDD, and requests the bundle A to print the document data as the confidential document (S712 and S713). Processes in S714 through S716 are the same as the corresponding processes in S511 through S513 shown in FIG. 15, respectively. The bundle B sends the printed result (OK or NG) to the bundle D (S717).

The bundle D sends a log off request to the bundle B via the bridge section 107 (S718 and S719). Processes in S720 through S724 are the same as the corresponding processes in S516 through S520 shown in FIG. 15, respectively. The bundle B sends the log off result (OK or NG) to the bundle D via the bridge section 107 (S725 and S726). The bundle D causes the operating panel to display the log off result (S727).

As described above, in the MFP 1 according to the embodiment of the present invention, it is determined whether the resources (bundles 105 in a program runtime environment) can be used by another program runtime environment in each of the program runtime environments 103a, 103b, and 103c, and not in each of the programs (bundles 105). Therefore, the MFP 1 can easily realize program access control by compared to a conventional apparatus which performs access control of the resources in each of the programs.

Further, the present invention is not limited to the specifically disclosed embodiment, and variations and modifications may be made without departing from the scope of the present invention.

The present invention is based on Japanese Priority Patent Application No. 2008-040215, filed on February 21, 2008, with the Japanese Patent Office,

## Claims

1. An image forming apparatus (1) **characterized in that** the image forming apparatus comprises:
a plurality of program runtime environments (103 a, 103b, and 103c) being a plurality of Java virtual machines in which a program (105) being a bundle can be added to at least one of the plural program runtime environments (103a, 103b, and 103c);
wherein for each of the Java virtual machines, the use of Native Code is controlled;
a storage unit adapted to store in each of the program runtime environments (103a, 103b, and 103c) usage acceptance information, showing whether a program (105) operable in a source program runtime environment being a first bundle can use a function executable in another target program runtime environment being a second bundle to be executed by request; and
a determining unit (107) adapted to determine, when an execution request for a function is given to a target program runtime environment of the plural program runtime environments, whether the function executable in the target program runtime environment can be used, based on the usage acceptance information stored in the target program runtime environment;
wherein the determining unit (107) is adapted to send the execution request to the second bundle when a bundle type of the first bundle (105) is included in the usage acceptance information;
wherein the second bundle performs processes of the requested function and sends the processing result to the first bundle (105) via the determining unit (107).

2. The image forming apparatus (1) as claimed in claim 1, wherein in the usage acceptance information, information to identify the program runtime environment (103a, 103b, or 103c) which can be used by the program (105) is stored in the program (105).

3. The image forming apparatus (1) as claimed in any one of claims 1 and 2, wherein in the program (105) to be added to the image forming apparatus (1), runtime environment identifying information (1052) for identifying a program runtime environment corresponding to the program to be added is related to an electronic signature (1053) corresponding to the runtime environment identifying information (1052); and
the image forming apparatus (1) further comprises
a falsification detecting unit (109, 110, and 111) which detects a falsification of the runtime environment identifying information (1052) based on the electronic signature (1053).

4. An information processing method in an image forming apparatus (1) having a plurality of program runtime environments (103a, 103b, and 103c) being a plurality of Java virtual machines in which a program (105) being a bundle can be added to at least one of the plural program runtime environments (103 a, 103b, and 103c), the method **characterized by**:
controlling for each of the Java virtual machines, the use of Native Code;
storing in each of the program runtime environments (103a, 103b, and 103c) usage acceptance information, showing whether a program (105) operable in a source program runtime environment being a first bundle can use a function executable in another target program runtime environment being a second bundle to be executed by request; and
determining, when an execution request for a function is given to a target program runtime environment of the plural program runtime environments, whether the function executable in the target program runtime environment can be used, based on the usage acceptance information stored in the target program runtime environment;
wherein in the determining step, the execution request is sent to the second bundle when a bundle type of the first bundle (105) is included in the usage acceptance information;
wherein the second bundle performs processes of the requested function and sends the processing result to the first bundle (105) via the determining unit (107).

5. The information processing method as claimed in claim 4, wherein in the usage acceptance information, information to identify the program runtime environment (103a, 103b, or 103c) which can be used by the program (105) is stored in the program (105).

6. The information processing method as claimed in claim 4, wherein in the program (105) to be added to the image forming apparatus (1), runtime environment identifying information (1052) for identifying a program runtime environment corresponding to the program to be added is related to an electronic signature (1053) corresponding to the runtime environment identifying information (1052); and
the information processing method further comprises a falsification detecting step which detects a falsification of the runtime environment identifying information (1052) based on the electronic signature (1053).

7. A computer-readable recording medium storing an information processing program in an image forming apparatus (1) having a plurality of program runtime environments (103 a, 103b, and 103c) being a plurality of Java virtual machines in which a program (105) being a bundle can be added to at least one of the plural program runtime environments (103 a, 103b, and 103c), **characterized in that**
the information processing program includes the steps of
controlling for each of the Java virtual machines, the use of Native Code;
storing in each of the program runtime environments (103a, 103b, and 103c) usage acceptance information, showing whether a program (105) operable in a source program runtime environment being a first bundle can use a function executable in another target program runtime environment being a second bundle to be executed by request; and
determining, when an execution request for a function is given to a target program runtime environment of the plural program runtime environments, whether the function executable in the target program runtime environment can be used, based on the usage acceptance information stored in the target program runtime environment,
wherein in the determining step, the execution request is sent to the second bundle when a bundle type of the first bundle (105) is included in the usage acceptance information;
wherein the second bundle performs processes of the requested function and sends the processing result to the first bundle (105) via the determining unit (107).

8. The computer-readable recording medium storing the information processing program in the image forming apparatus (1) as claimed in claim 7, wherein
in the usage acceptance information of the information processing program, information to identify the program runtime environment (103a, 103b, or 103c) which can be used by the program (105) is stored in the program (105).

9. The computer-readable recording medium storing the information processing program in the image forming apparatus (1) as claimed in any one of claims 7 and 8, wherein in the program (105) to be added to the image forming apparatus (1), runtime environment identifying information (1052) for identifying a program runtime environment corresponding to the program to be added is related to an electronic signature (1053) corresponding to the runtime environment identifying information (1052); and
the information processing program further comprises
a falsification detecting step which detects a falsification of the runtime environment identifying information (1052) based on the electronic signature (1053).

## Patentansprüche

1. Bilderzeugungsvorrichtung (1), **dadurch gekennzeichnet, dass**
die Bilderzeugungsvorrichtung umfasst:
mehrere Programmlaufzeitumgebungen (1031, 103b und 103c), die mehrere virtuelle Java-Maschinen sind, wobei ein Programm (105), das ein Bundle ist, zu mindestens einer der mehreren Programmlaufzeitumgebungen (103a, 103b und 103c) hinzugefügt werden kann;
wobei für jede der virtuellen Java-Maschinen die Verwendungen eines systemeigenen Codes gesteuert wird;
eine Speichereinheit, die ausgelegt ist, in jeder der Programmlaufzeitumgebungen (103a, 103b und 103c) Verwendungsakzeptanzinformationen zu speichern, die zeigen, ob ein Programm (105), das in einer Quellprogrammlaufzeitumgebung betreibbar ist, die ein erstes Bundle ist, eine Funktion verwenden kann, die in einer anderen Zielprogrammlaufzeitumgebung, die ein zweites Bundle ist, das auf Anforderung auszuführen ist, ausführbar ist; und
eine Bestimmungseinheit (107), die ausgelegt ist, dann, wenn eine Ausführungsanforderung für eine Funktion an eine Zielprogrammlaufzeitumgebung der mehreren Programmlaufzeitumgebungen gegeben wird, anhand der in der Zielprogrammlaufzeitumgebung gespeicherten Verwendungsakzeptanzinformationen zu bestimmen, ob die in der Zielprogrammlaufzeitumgebung ausführbare Funktion verwendet werden kann;
wobei die Bestimmungseinheit (107) ausgelegt ist, die Ausführungsanforderung an das zweite Bundle zu senden, wenn ein Bundle-Typ des ersten Bundle (105) in den Verwendungsakzeptanzinformationen enthalten ist;
wobei das zweite Bundle Prozesse der angeforderten Funktion ausführt und das Verarbeitungsergebnis über die Bestimmungseinheit (107) an das erste Bundle (105) sendet.

2. Bilderzeugungsvorrichtung (1) nach Anspruch 1, wobei in den Verwendungsakzeptanzinformationen Informationen, um die Programmlaufzeitumgebung (103a, 103b und 103c), die durch das Programm (105) verwendet werden kann, zu identifizieren, in dem Programm (105) gespeichert sind.

3. Bilderzeugungsvorrichtung (1) nach einem der Ansprüche 1 und 2, wobei in dem Programm (105), das zu der Bilderzeugungsvorrichtung (1) hinzuzufügen ist, Laufzeitumgebungsidentifikationsinformationen (1052) zum Identifizieren einer Programmlaufzeitumgebung, die dem hinzuzufügenden Programm entspricht, sich auf eine elektronische Signatur (1053) beziehen, die den Laufzeitumgebungsidentifikationsinformationen (1052) entspricht; und
die Bilderzeugungsvorrichtung (1) ferner umfasst:
eine Fälschungsdetektionseinheit (109, 110 und 111), die eine Fälschung der Laufzeitumgebungsidentifikationsinformationen (1052) anhand der elektronischen Signatur (1053) detektiert.

4. Datenverarbeitungsverfahren in einer Bilderzeugungsvorrichtung (1) mit mehreren Programmlaufzeitumgebungen (103a, 103b und 103c), die mehrere virtuelle Java-Maschinen sind, wobei ein Programm (105), das ein Bundle ist, zu mindestens einer der mehreren Programmlaufzeitumgebungen (103a, 103b und 103c) hinzugefügt werden kann, wobei das Verfahren **gekennzeichnet ist durch**:
Steuern für jede der virtuellen Java-Maschinen der Verwendung eines systemeigenen Codes;
Speichern in jeder der Programmlaufzeitumgebungen (103a, 103b und 103c) von Verwendungsakzeptanzinformationen, die zeigen, ob ein Programm (105), das in einer Quellprogrammlaufzeitumgebung betreibbar ist, die ein erstes Bundle ist, eine Funktion verwenden kann, die in einer anderen Zielprogrammlaufzeitumgebung, die ein zweites Bundle ist, das auf Anforderung auszuführen ist, ausführbar ist; und
dann, wenn eine Ausführungsanforderung für eine Funktion an eine Zielprogrammlaufzeitumgebung der mehreren Programmlaufzeitumgebungen gegeben wird, Bestimmen, ob die in der Zielprogrammlaufzeitumgebung ausführbare Funktion verwendet werden kann, anhand der in der Zielprogrammlaufzeitumgebung gespeicherten Verwendungsakzeptanzinformationen;
wobei in dem Bestimmungsschritt die Ausführungsanforderung an das zweite Bundle gesendet wird, wenn ein Bundle-Typ des ersten Bundle (105) in den Verwendungsakzeptanzinformationen enthalten ist;
wobei das zweite Bundle Prozesse der angeforderten Funktion ausführt und das Verarbeitungsergebnis über die Bestimmungseinheit (107) an das erste Bundle (105) sendet.

5. Datenverarbeitungsverfahren nach Anspruch 4, wobei in den Verwendungsakzeptanzinformationen Informationen, um die Programmlaufzeitumgebung (103a, 103b und 103c), die durch das Programm (105) verwendet werden kann, zu identifizieren, in dem Programm (105) gespeichert sind.

6. Datenverarbeitungsverfahren nach Anspruch 4, wobei in dem Programm (105), das zu der Bilderzeugungsvorrichtung (1) hinzuzufügen ist, Laufzeitumgebungsidentifikationsinformationen (1052) zum Identifizieren einer Programmlaufzeitumgebung, die dem hinzuzufügenden Programm entspricht, sich auf eine elektronische Signatur (1053) beziehen, die den Laufzeitumgebungsidentifikationsinformationen (1052) entspricht; und
das Datenverarbeitungsverfahren ferner einen Fälschungsdetektionsschritt umfasst, der eine Fälschung der Laufzeitumgebungsidentifikationsinformationen (1052) anhand der elektronischen Signatur (1053) detektiert.

7. Computerlesbares Aufzeichnungsmedium, das ein Datenverarbeitungsprogramm in einer Bilderzeugungsvorrichtung (1) mit mehreren Programmlaufzeitumgebungen (103a, 103b und 103c), die mehrere virtuelle Java-Maschinen sind, speichert, wobei ein Programm (105), das ein Bundle ist, zu mindestens einer der mehreren Programmlaufzeitumgebungen (103a, 103b und 103c) hinzugefügt werden kann, **dadurch gekennzeichnet ist, dass** das Datenverarbeitungsprogramm die folgenden Schritte enthält:
Steuern für jede der virtuellen Java-Maschinen der Verwendung eines systemeigenen Codes;
Speichern in jeder der Programmlaufzeitumgebungen (103a, 103b und 103c) von Verwendungsakzeptanzinformationen, die zeigen, ob ein Programm (105), das in einer Quellprogrammlaufzeitumgebung betreibbar ist, die ein erstes Bundle ist, eine Funktion verwenden kann, die in einer anderen Zielprogrammlaufzeitumgebung, die ein zweites Bundle ist, das auf Anforderung auszuführen ist, ausführbar ist; und
dann, wenn eine Ausführungsanforderung für eine Funktion an eine Zielprogrammlaufzeitumgebung der mehreren Programmlaufzeitumgebungen gegeben wird, Bestimmen, ob die in der Zielprogrammlaufzeitumgebung ausführbare Funktion verwendet werden kann, anhand der in der Zielprogrammlaufzeitumgebung gespeicherten Verwendungsakzeptanzinformationen;
wobei in dem Bestimmungsschritt die Ausführungsanforderung an das zweite Bundle gesendet wird, wenn ein Bundle-Typ des ersten Bundle (105) in den Verwendungsakzeptanzinformationen enthalten ist;
wobei das zweite Bundle Prozesse der angeforderten Funktion ausführt und das Verarbeitungsergebnis über die Bestimmungseinheit (107) an das erste Bundle (105) sendet.

8. Computerlesbares Aufzeichnungsmedium, das das Datenverarbeitungsprogramm in der Bilderzeugungsvorrichtung speichert, nach Anspruch 7, wobei
in den Verwendungsakzeptanzinformationen Informationen, um die Programmlaufzeitumgebung (103a, 103b und 103c), die durch das Programm (105) verwendet werden kann, zu identifizieren, in dem Programm (105) gespeichert sind.

9. Computerlesbares Aufzeichnungsmedium, das das Datenverarbeitungsprogramm in der Bilderzeugungsvorrichtung (1) speichert, nach einem der Ansprüche 7 und 8, wobei in dem Programm (105), das zu der Bilderzeugungsvorrichtung (1) hinzuzufügen ist, Laufzeitumgebungsidentifikationsinformationen (1052) zum Identifizieren einer Programmlaufzeitumgebung, die dem hinzuzufügenden Programm entspricht, sich auf eine elektronische Signatur (1053) beziehen, die den Laufzeitumgebungsidentifikationsinformationen (1052) entspricht; und
das Datenverarbeitungsprogramm ferner umfasst:
einen Fälschungsdetektionsschritt, der eine Fälschung der Laufzeitumgebungsidentifikationsinformationen (1052) anhand der elektronischen Signatur (1053) detektiert.

## Revendications

1. Appareil de formation d'images (1) **caractérisé en ce que**
l'appareil de formation d'images comporte :
une pluralité d'environnements d'exécution de programmes (103a, 103b et 103c) qui consiste une pluralité de machines virtuelles Java, dans lesquelles un programme (105) formant un paquet peut être ajouté à au moins un de la pluralité d'environnements d'exécution de programmes (103a, 103b et 103c) ;
où l'utilisation de code natif est contrôlée pour chacune des machines virtuelles Java ;
une unité de stockage apte à stocker dans chacun des environnements d'exécution de programmes (103a, 103b et 103c) une information d'acceptation d'utilisation indiquant si un programme (105) pouvant être exécuté dans un environnement d'exécution de programme source formant un premier paquet peut utiliser une fonction exécutable dans un autre environnement d'exécution de programme cible formant un second paquet pour une exécution sur demande ; et
une unité de détermination (107) apte à déterminer, lorsqu'une demande d'exécution d'une fonction est adressée à un environnement d'exécution de programme cible parmi la pluralité d'environnements d'exécution de programme, si la fonction exécutable dans l'environnement d'exécution de programme cible peut être utilisée, à partir de l'information d'acceptation d'utilisation stockée dans l'environnement d'exécution de programme cible ;
où l'unité de détermination (107) est apte à envoyer la demande d'exécution au second paquet lorsque le type de paquet du premier paquet (105) est inclus dans l'information d'acceptation d'utilisation ;
où le second paquet exécute des procédures de la fonction demandée et envoie le résultat de la procédure au premier paquet (105) via l'unité de détermination (107).

2. Appareil de formation d'images (1) selon la revendication 1, où parmi les informations d'acceptation d'utilisation, des informations pour identifier l'environnement d'exécution de programme (103a, 103b ou 103c) pouvant être utilisé par le programme (105) sont stockées dans le programme (105).

3. Appareil de formation d'images (1) selon l'une quelconque des revendications 1 et 2, où, dans le programme (105) à ajouter à l'appareil de formation d'images (1), des informations d'identification d'environnement d'exécution (1052) pour l'identification d'un environnement d'exécution de programme correspondant au programme à ajouter sont liées à une signature électronique (1053) correspondant à l'information d'identification d'environnement d'exécution (1052) ; et
l'appareil de formation d'images (1) comporte en outre
une unité de détection de falsification (109, 110 et 111) qui détecte une falsification de l'information d'identification d'environnement d'exécution (1052) à partir de la signature électronique (1053).

4. Procédé de traitement d'informations dans un appareil de formation d'images (1) comprenant une pluralité d'environnements d'exécution de programmes (103a, 103b et 103c) qui consiste en une pluralité de machines virtuelles Java, dans lesquelles un programme (105) formant un paquet peut être ajouté à au moins un de la pluralité d'environnements d'exécution de programmes (103a, 103b et 103c), le procédé étant **caractérisé par** :
le contrôle de l'utilisation de code natif pour chacune des machines virtuelles Java ;
le stockage dans chacun des environnements d'exécution de programmes (103a, 103b et 103c) d'informations d'acceptation d'utilisation indiquant si un programme (105) pouvant être exécuté dans un environnement d'exécution de programme source formant un premier paquet peut utiliser une fonction exécutable dans un autre environnement d'exécution de programme cible formant un second paquet pour une exécution sur demande ; et
la détermination, lorsqu'une demande d'exécution d'une fonction est adressée à un environnement d'exécution de programme cible parmi la pluralité d'environnements d'exécution de programme, si la fonction exécutable dans l'environnement d'exécution de programme cible peut être utilisée, à partir de l'information d'acceptation d'utilisation stockée dans l'environnement d'exécution de programme cible ;
où lors de l'étape de détermination, la demande d'exécution est envoyée au second paquet lorsque le type de paquet du premier paquet (105) est inclus dans l'information d'acceptation d'utilisation ;
où le second paquet exécute des procédures de la fonction demandée et envoie le résultat de la procédure au premier paquet (105) via l'unité de détermination (107).

5. Procédé de traitement d'informations selon la revendication 4, où parmi les informations d'acceptation d'utilisation, des informations pour identifier l'environnement d'exécution de programme (103a, 103b ou 103c) pouvant être utilisé par le programme (105) sont stockées dans le programme (105).

6. Procédé de traitement d'informations selon la revendication 4, où, dans le programme (105) à ajouter à l'appareil de formation d'images (1), des informations d'identification d'environnement d'exécution (1052) pour l'identification d'un environnement d'exécution de programme correspondant au programme à ajouter sont liées à une signature électronique (1053) correspondant à l'information d'identification d'environnement d'exécution (1052) ; et
le procédé de traitement d'informations comporte en outre une étape de détection de falsification qui détecte une falsification de l'information d'identification d'environnement d'exécution (1052) à partir de la signature électronique (1053).

7. Support d'enregistrement lisible par ordinateur stockant un programme de traitement d'informations dans un appareil de formation d'images (1) comportant une pluralité d'environnements d'exécution de programmes (103a, 103b et 103c) qui consiste en une pluralité de machines virtuelles Java, dans lesquelles un programme (105) formant un paquet peut être ajouté à au moins un de la pluralité d'environnements d'exécution de programmes (103a, 103b et 103c), **caractérisé en ce que**
le programme de traitement d'informations comprend les étapes consistant à
contrôler l'utilisation de code natif pour chacune des machines virtuelles Java ; stocker dans chacun des environnements d'exécution de programmes (103a, 103b et 103c) des informations d'acceptation d'utilisation indiquant si un programme (105) pouvant être exécuté dans un environnement d'exécution de programme source formant un premier paquet peut utiliser une fonction exécutable dans un autre environnement d'exécution de programme cible formant un second paquet pour une exécution sur demande ; et
déterminer, lorsqu'une demande d'exécution d'une fonction est adressée à un environnement d'exécution de programme cible parmi la pluralité d'environnements d'exécution de programme, si la fonction exécutable dans l'environnement d'exécution de programme cible peut être utilisée, à partir de l'information d'acceptation d'utilisation stockée dans l'environnement d'exécution de programme cible ;
où lors de l'étape de détermination, la demande d'exécution est envoyée au second paquet lorsque le type de paquet du premier paquet (105) est inclus dans l'information d'acceptation d'utilisation ;
où le second paquet exécute des procédures de la fonction demandée et envoie le résultat de la procédure au premier paquet (105) via l'unité de détermination (107).

8. Support d'enregistrement lisible par ordinateur stockant le programme de traitement d'informations dans l'appareil de formation d'images (1) selon la revendication 7, où
parmi les informations d'acceptation d'utilisation du programme de traitement d'information, des informations pour identifier l'environnement d'exécution de programme (103a, 103b ou 103c) pouvant être utilisé par le programme (105) sont stockées dans le programme (105).

9. Support d'enregistrement lisible par ordinateur stockant le programme de traitement d'informations dans l'appareil de formation d'images (1) selon l'une quelconque des revendications 7 et 8, où dans le programme (105) à ajouter à l'appareil de formation d'images (1), des informations d'identification d'environnement d'exécution (1052) pour l'identification d'un environnement d'exécution de programme correspondant au programme à ajouter sont liées à une signature électronique (1053) correspondant à l'information d'identification d'environnement d'exécution (1052) ; et
le programme de traitement d'informations comporte en outre
une étape de détection de falsification qui détecte une falsification de l'information d'identification d'environnement d'exécution (1052) à partir de la signature électronique (1053).
